# FASCICULE DE BREVET EUROPEEN

(11) **EP 0 873 907 B1**
(45) Date de publication et mention de la délivrance du brevet: **23.01.2002**
(21) Numéro de dépôt: 98105263.2
(22) Date de dépôt: 24.03.1998
(51) Int. Cl.: B60Q 1/40, F16B 7/14

(54) **Bague de fixation pour ensemble de commandes placées sous le volant d'un véhicule automobile**
Befestigungsring für eine unterhalb des Lenkrads eines Kraftfahrzeugs angeordnete Steuereinheit
Ring for mounting a control unit below the steering wheel of an automotive vehicle

(30) Priorité: 26.03.1997 FR 9703697
(43) Date de publication de la demande: 28.10.1998
(73) Titulaire: VALEO ELECTRONIQUE, 94042 Creteil Cédex (FR)
(72) Inventeur: Mascaro, Alain, 91000 Evry (FR); Lhernault, Alain, 77144 Chalifert (FR)
(74) Mandataire: Gamonal, Didier

(56) Documents cités:
- EP-A- 0 082 997
- EP-A- 0 730 098
- DE-C- 3 807 028
- US-A- 3 667 788
- US-A- 5 037 235

## Description

La présente invention concerne les ensembles de commandes placées sous les volants des véhicules automobiles.

Ainsi qu'on le sait un tel ensemble présente une douille conformée pour être enfilée et fixée à serrage sur le tube de la colonne de direction.

A cet effet la douille est dotée de fentes borgnes pour formation de secteurs annulaires de serrage. La douille est donc radialement déformable.

Un tel ensemble est décrit par exemple dans le document FR 96 06655 déposé le 30 mai 1996 FR-A-2 749 354 auquel on pourra se reporter pour plus de précisions.

Pour mémoire on rappellera que dans ce document la douille (figures 1 et 2) appartient à un support 2 de commutateurs placés sous le volant du véhicule pour commander notamment les fonctions d'éclairage, de signalisation et d'essuyage du véhicule. Le support avec ses commutateurs forme l'ensemble de commandes précité placées sous le volant du véhicule.

La fixation est réalisée à l'aide d'un organe de fixation sous la forme d'un collier de fixation 3 porté par le support 2 des commutateurs.

Le collier 3 entoure la douille 1 fendue en 7 et présente des mâchoires à action radiale à savoir une mâchoire mobile 4 appartenant à une griffe recourbée portée en excroissance par le collier, et une mâchoire fixe 5. La mâchoire mobile 4 est en prise avec une vis 6 de réglage, globalement d'orientation axiale, portée par le support en étant accessible à partir de la face frontale F du support. La vis 6 permet de régler le serrage.

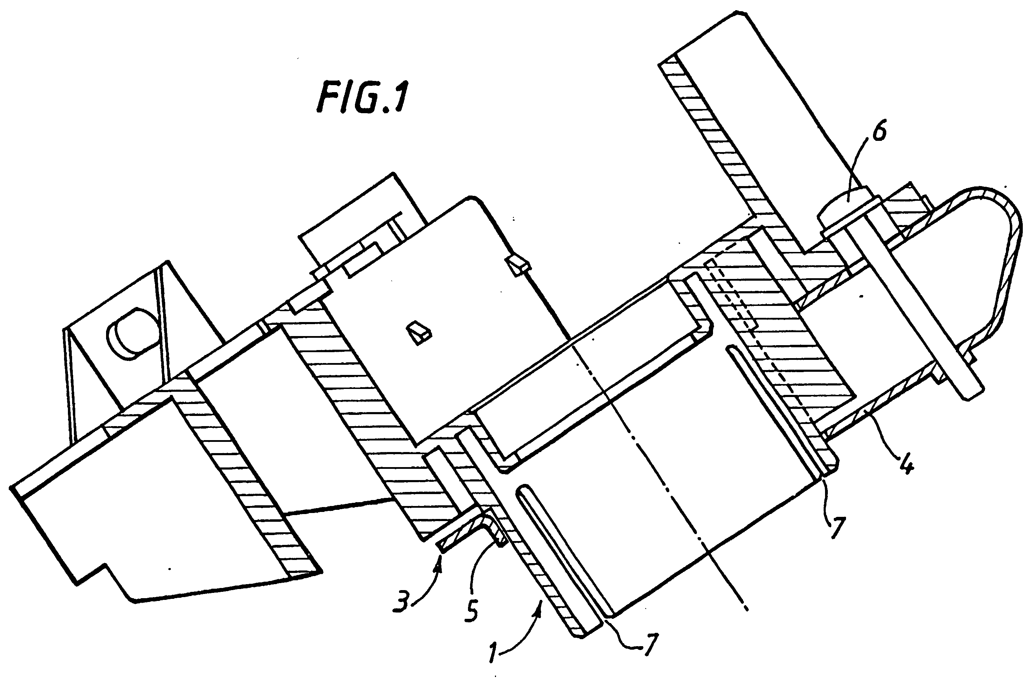

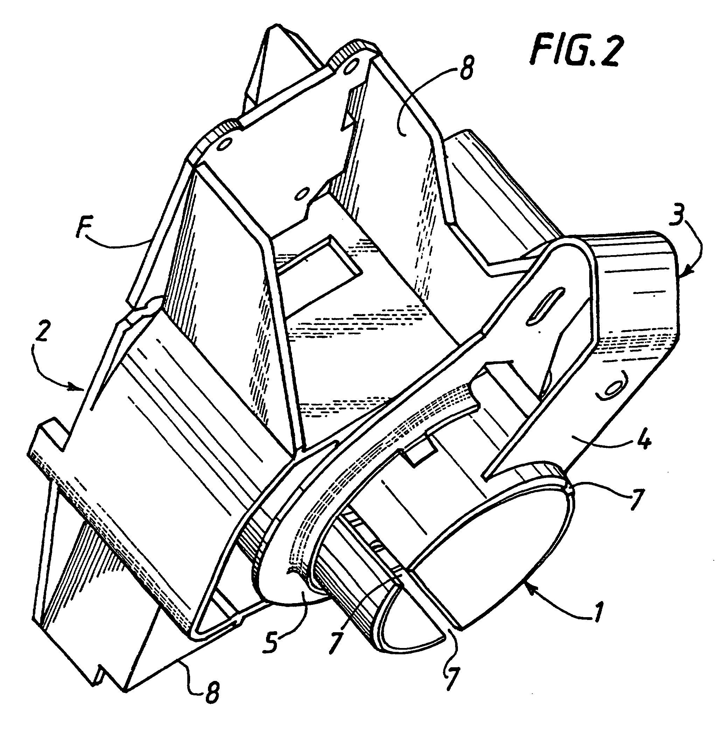

Comme visible dans les figures 1 et 2, le support 2 comporte des logements 8 pour montage des commutateurs respectivement d'éclairage et d'essuyage comportant chacun, de manière usuelle, une manette de commande. Un contacteur tournant est monté au centre du support pour assurer des liaisons électriques avec des organes et/ou de commandes portés par le volant du véhicule.

Cette disposition donne satisfaction. Néanmoins il peut être souhaitable de s'affranchir de la présence de la vis de serrage, dont la tête peut dans certaines configurations être difficile d'accès. Il peut être également souhaitable d'avoir une fixation plus rapide.

La présente invention a pour objet de répondre, de manière simple et économique, à ces souhaits.

Suivant l'invention un ensemble de commandes du type sus-indiqué est caractérisé en ce que la douille présente à sa périphérie externe des rampes, en ce que la douille est entourée par une bague de fixation présentant des contre-rampes conformées pour coopérer avec les rampes en sorte qu'un déplacement de la bague par rapport à la douille de la bague entraîne une diminution du diamètre interne de la douille.

Grâce à l'invention on diminue le nombre de pièces car la fixation est réalisée à l'aide d'une bague robuste montée par avance sur la douille.

La fixation est plus rapide car il suffit de faire tourner la bague, ce qui permet de réduire le temps de montage sur les chaînes de fabrication du constructeur automobile.

Cette fixation est moins fragile car la bague est une pièce beaucoup plus robuste que le collier des figures 1 et 2.

En outre, grâce aux rampes et contre-rampes, on peut rattraper les tolérances de fabrication en sorte que la fabrication de la bague et de la douille n'ont pas besoin d'être réalisées de manière précise.

La solution selon l'invention est simple et économique car les rampes et les contre-rampes peuvent être obtenues aisément par moulage, la bague et la douille étant avantageusement en matière moulable, telle que de la matière plastique.

En outre le serrage est plus énergique, plus uniforme et mieux contrôlé.

De plus la bague entoure la douille et protège donc celle-ci, notamment lors de mauvaises manipulations avant montage.

La bague est plus rigide que la douille. Dans une forme de réalisation la bague est montée rotative sur la douille et les rampes et contre-rampes sont d'orientation circonférentielle en étant emboîtées les unes dans les autres. La bague a intérieurement une forme de came car elle a intérieurement un profil non circulaire dû à la présence des contre-rampes inclinées ici circonférentiellement, en sens inverse par rapport aux rampes. Les rampes et contre-rampes ont une forme complémentaire. La bague est donc une came de manoeuvre permettant de contrôler le serrage de la douille sur le tube de la colonne de direction. Le mouvement de rotation de la bague est, compte tenu de sa rigidité, transformé en un déplacement radial vers l'intérieur de la douille grâce aux rampes et contre-rampes. Ce déplacement conduit à une augmentation d'épaisseur de l'ensemble douille - bague lorsque ladite bague tourne au contact des rampes inclinées.

En variante les rampes, par exemple de forme tronconique, et les contre-rampes sont d'orientation axiale et la bague est montée à rotation et à translation sur la douille à l'aide d'une came par exemple en forme de portion d'hélice. Une rotation de la bague entraîne un déplacement en translation de celle-ci qui est comme précédemment transformé en un déplacement radial vers l'intérieur de la douille.

Dans une forme de réalisation les rampes sont formées sur des secteurs de serrage qui participent tous de manière efficace au serrage contrôlé. La douille est donc admise à pincer le tube de la colonne de direction.

L'invention permet de diminuer la longueur circonférentielle des secteurs de serrage, en sorte que l'on peut augmenter la largeur des fentes, ce qui permet l'implantation de languettes crantées permettant un montage rapide par encliquetage de la douille sur le tube de la colonne de direction.

Avantageusement la bague présente une excroissance de préhension, telle qu'une poignée permettant à l'opérateur ou à un robot de saisir la poignée par l'arrière pour faire tourner la bague et réaliser le serrage de manière contrôlée. L'excroissance facilite donc un montage robotisé.

Ainsi qu'on l'aura compris la bague présente des dégagements axiaux en regard des languettes permettant à celles-ci de se déployer radialement lors du montage par encliquetage sur le tube de la colonne de direction. De la matière existe entre la périphérie externe de la bague et le fond du dégagement par exemple en forme de rainure à section en forme de U ouvert vers l'intérieur.

Lors de la fixation, la bague recouvre les languettes, qui sont ainsi maintenues prisonnières dans des logements pratiqués dans le tube de la colonne de direction. Ces logements peuvent être borgnes ou ouverts.

La fixation selon l'invention ne fait donc appel qu'à une pièce élastique à savoir la douille.

Dans une forme de réalisation cette bague présente au moins une lumière circonférentielle dans laquelle pénètre à jeu circonférentiel un ergot issu en saillie radiale vers l'extérieur de la périphérie externe de la douille, ou en variante du support de commutateurs.

Pour une bonne répartition des efforts au moins deux lumières et deux ergots complémentaires sont prévus. Ceci permet d'implanter la bague le plus près de l'extrémité libre de fa douille, c'est-à-dire au niveau de la portion la plus déformable de celle-ci.

Ainsi la bague est portée à rotation sur la douille ou le support en étant guidée par ceux-ci. Cette bague est donc également une bague de réglage du serrage de la douille sur le tube de la colonne de direction.

Dans une autre forme de réalisation la lumière est d'orientation circonférentielle et axiale, l'ergot pénétrant dans ladite lumière. Ainsi un mouvement de rotation de la bague entraîne un déplacement axial de celle-ci.

Bien entendu la pente des rampes est telle que le serrage soit irréversible.

D'autres avantages apparaîtront à la lumière de la description qui va suivre en regard des dessins annexés dans lesquels :
- la figure 1 est une vue en coupe axiale d'un support de commutateurs de l'art antérieur équipé d'un collier de fixation à serrage réglé par une vis de réglage ;
- la figure 2 est une vue en perspective correspondant à la figure 1 sans la vis de réglage ;
- la figure 3 est une vue partielle en perspective montrant l'équipage bague de fixation - douille selon l'invention ;
- la figure 4 est une vue partielle du tube de colonne de direction ;
- la figure 5 est une vue analogue à la figure 3, avec arrachement local, pour un autre exemple de réalisation.

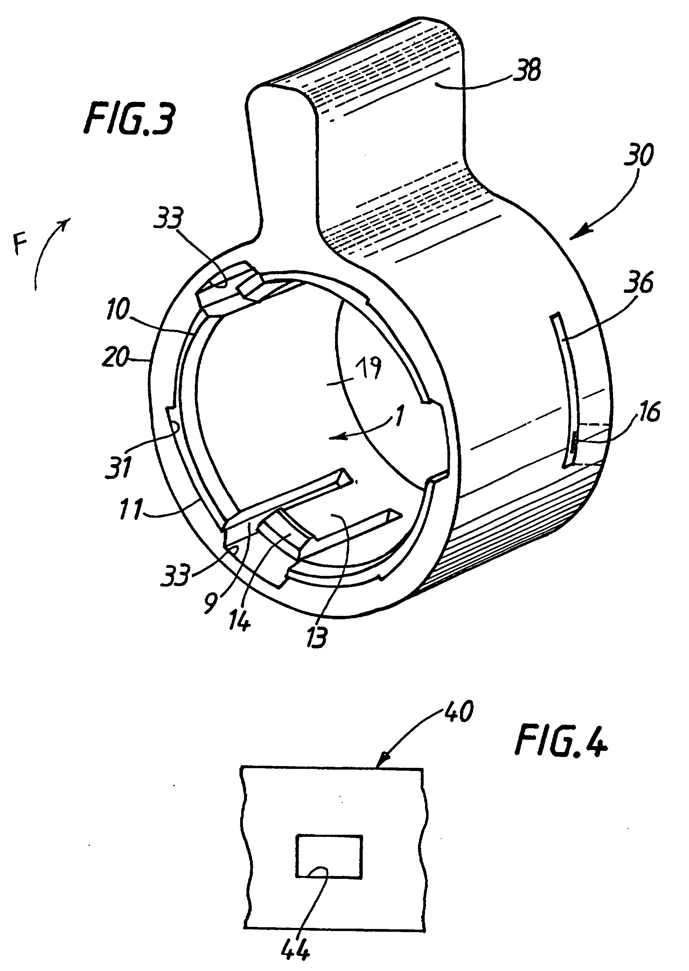

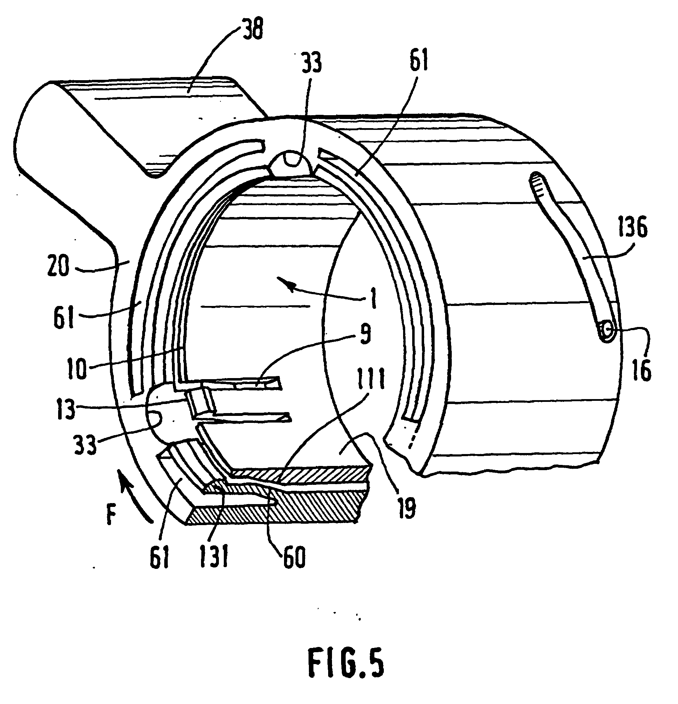

Dans les figures 3 et 5, on n'a pas représenté par simplicité le support 2 (figures 1 et 2) des commutateurs placés sous le volant du véhicule, mais seulement la douille de serrage portée par ledit support.

Cette douille 1 est déformable radialement vers l'intérieur grâce à des fentes borgnes 9. La douille 1 est destinée à être enfilée sur le tube de la colonne de direction et à être fixée à serrage sur ledit tube.

Suivant une caractéristique de l'invention on remplace le collier 3 des figures 1 et 2 par une bague de fixation 30, avantageusement en matière moulable, comme la douille 1 déformable radialement.

La bague de fixation 30 et la douille de serrage 1 sont ici en matière plastique moulable ce qui facilite la déformation de la douille 1 et rend plus légère ces pièces 30,1.

En outre ceci est favorable du point de vue des phénomènes de corrosion et du point de vue économique.

La bague 30 formant organe de fixation est, suivant une caractéristique, rigide. La bague 30 porte à sa périphérie externe une excroissance 38 de préhension s'étendant en saillie radialement vers l'extérieur. Cette excroissance 38 est ici en forme de poignée.

La douille 1 présente des fentes 9 d'orientation axiale. Les fentes 9 débouchent à l'extrémité libre de la douille. Les fentes 9 sont issues d'une couronne 19 continue que présente la douille 1 à son extrémité axiale arrière opposée à son extrémité libre.

C'est par l'intermédiaire de cette couronne 19 rigide que la douille 1 est reliée au support de commutateurs comme visible dans les figures 1 et 2. Les fentes sont donc ouvertes au niveau de l'extrémité libre de la douille 1. Les fentes délimitent des secteurs annulaires de serrage 10 s'étendant en saillie axiale par rapport à la couronne 19, en sorte que la douille 1 est déformable radialement au-delà de la couronne. Il est donc possible de diminuer à cet endroit le diamètre de la douille 1.

Suivant une caractéristique chaque secteur de serrage 10 présente à sa périphérie externe au moins une rampe 11 (figure 3), 111 (figure 5). Ici trois fentes 9 et trois secteurs 10 sont prévus.

Les secteurs 10 sont souples et déformables radialement vers l'intérieur grâce aux fentes 9. Dans le mode de réalisation de la figure 5 les rampes 111 sont d'orientation axiale. Dans le mode de réalisation de la figure 3, les rampes 11 sont d'orientation circonférentielle. Dans tous les cas les rampes 11,111 appartiennent à des moyens de rampes.

Chaque secteur 10 présente à la figure 3 à sa périphérie externe deux rampes 11 convexes d'orientation circonférentielle. A la figure 5 une rampe 111 est prévue par secteur 10. Chaque secteur de serrage 10 est donc d'épaisseur variable.

La répartition des secteurs 10 et des fentes 9 est régulière ; trois fentes 9 réparties à 120° les unes par rapport aux autres sont ici prévues. Trois secteurs de serrage sont donc ici prévus.

Les fentes 9 sont plus larges que celles des figures 1 et 2 en sorte que les secteurs 10 sont moins étendus circonférentiellement que ceux des figures 1 et 2 et donc plus souples.

Suivant une caractéristique, dans les figures 3 et 5, on profite de cette augmentation de largeur des fentes 9 pour implanter des languettes 13 s'étendant en saillie axiale par rapport à la couronne 19 sur une longueur inférieure à celle des secteurs 10 en sorte que les extrémités libres des languettes 13 sont en retraits axialement par rapport à l'extrémité libre fractionnée de la douille 1.

Cette douille 1 porte à sa périphérie externe au moins un ergot 16 s'étendant en saillie radialement vers l'extérieur. Ici deux ergots 16 diamétralement opposés sont prévus.

A la figure 3 les rampes 11 sont de hauteur circonférentiellement continûment variable. Par exemple ces rampes ont à leur périphérie externe un profil en forme de portion de spirale. La pente des rampes et leur forme dépend d'une manière générale des applications. Elle est telle que, par coopération avec des contre-rampes, décrites ci-après, il y ait une irréversibilité.

Les languettes 13 présentent à leur extrémité libre un cran 14 chanfreiné de façon à ce que les languettes 13 puissent s'enfiler de manière aisée sur le tube de la colonne de direction et se déployer au contact dudit tube.

Dans cette figure 3 deux rampes 11 consécutives sont délimitées par un épaulement raccordant l'extrémité haute d'une rampe 11 à l'extrémité basse de l'autre rampe 11 à la manière d'une dent de scie.

Toutes ces formes sont aisées à réaliser par moulage compte tenu que la douille 1 est en matière moulable, ici en matière plastique par exemple à base de polyamide chargé.

La bague 30 entoure la douille 1 et comporte suivant l'invention à sa périphérie interne des contre-rampes 31 (figure 3), 131 (figure 5) conformées pour coopérer, de manière complémentaire, avec les rampes 11. Les contre-rampes 31,131 sont donc des contre-rampes de manoeuvre et sont de forme concave à la figure 3.

Du fait que la bague 30 est rigide et que les rampes 11,111 appartiennent aux secteurs de serrage 10, déformables radialement grâce aux fentes, une rotation de la bague 30, dans le sens des aiguilles d'une montre en considérant la figure 3, entraîne une diminution du diamètre interne des secteurs de la douille 1. En effet une telle rotation conduit à une augmentation d'épaisseur de l'ensemble bague 30 - douille 1 du fait que les contre-rampes de manoeuvre 31 glissent et montent le long des rampes 11. Il en est de même à la figure 5, le mouvement de rotation de la bague 30 étant transformé également en mouvement de translation comme décrit ci-après.

Il en résulte donc une diminution du diamètre interne des secteurs de serrage 10 et donc de la douille 6.

Initialement le diamètre interne de la douille 1 est tel que celle-ci puisse être enfilée axialement sur le tube de la colonne de direction. Un jeu de montage existe entre la périphérie interne de la douille 1 et la périphérie externe dudit tube.

Sur les chaînes de montage on enfile axialement l'ensemble de commandes sur le tube.

Lors de ce mouvement les languettes 13 se déploient radialement vers l'extérieur compte tenu de la présence des crans 14 des languettes 13, lesdits crans faisant saillie radialement vers l'intérieur.

Ceci est facilité par le chanfrein que présente chaque cran 14 à son extrémité avant.

L'extrémité arrière de chaque cran est d'orientation transversale.

Suivant une caractéristique le tube 40 de la colonne de direction présente des fenêtres 44 pour réception de chaque cran 14. Le mouvement d'enfilage de l'ensemble de commandes sur le tube 40, par l'intermédiaire de la douille 1, se poursuit jusqu'à ce que les crans 14 se logent dans les fenêtres 44. La douille 1 se monte donc par encliquetage sur le tube 40.

Ainsi qu'on l'aura compris les languettes 13 sont des languettes de verrouillage axial grâce à leur cran 14.

Après cette opération d'enfilage on fait tourner la bague 30 grâce à sa poignée 38 pour serrer de manière uniforme les secteurs 10 au contact du tube 40. Lors de cette rotation la périphérie interne des contre-rampes 31,131 est admise à recouvrir les languettes 13, qui ainsi ne peuvent plus se déployer par la suite en sorte que l'on ne peut pas extraire l'ensemble de commandes.

Les contre-rampes 31,131 ont donc une double fonction à savoir une fonction de manoeuvre pour serrer les secteurs 10, et une fonction de verrouillage des languettes 13 pour maintenir celles-ci en position d'encliquetage. Les languettes 13, d'orientation axiale, ont des bords latéraux parallèles en sorte que les fentes 9 présentent deux branches longitudinales s'étendant de la couronne 19 à l'extrémité libre des languettes 13.

Au-delà des languettes 13 la fente 9 s'étend circonférentiellement entre deux secteurs 10 consécutifs.

Pour permettre le déploiement de languettes 13, la bague 30 présente à sa périphérie interne des dégagements 33 en regard de chaque languette 13. Ces dégagements 33 sont d'orientation axiale et ont une longueur axiale égale au moins à la longueur des languettes 13. Circonférentiellement ces dégagements 33 ont une largeur supérieure à celle des languettes 13.

Ici, par simplicité, les dégagements affectent intérieurement la bague 30 axialement sur toute sa longueur et les dégagements 33 ont circonférentiellement une largeur égale à celle des fentes 9 au niveau de l'extrémité libre de la douille 1.

Les dégagements 33 sont ici en forme de rainure axiale à section en forme de U ouvert vers l'intérieur, de la matière étant présente entre le fond des dégagements 33 et la périphérie externe de la bague 30.

Ainsi la bague 30 est fractionnée à sa périphérie interne en secteurs circulaires de manoeuvre 20 rigides séparés les uns des autres par les dégagements 33.

Ces secteurs 20 s'étendent angulairement selon un angle identique à celui des secteurs 10. A la figure 3 chaque secteur 20 comporte deux contre-rampes 31 s'étendant angulairement globalement selon le même angle que les rampes 11. Ces deux contre-rampes 31 sont séparées l'une de l'autre par un épaulement transversal à l'image de l'épaulement séparant entre elles les rampes 11.

A la figure 3 (position de repos - douille non serrée) l'extrémité haute d'une contre-rampe 31 est en contact avec l'extrémité basse d'une rampe 11, tandis que l'extrémité haute d'une rampe 11 est en contact avec l'extrémité basse d'une contre-rampe 31, les épaulements des rampes 11 et contre-rampes 31 étant en contact.

Les rampes 11 et contre-rampes 31 sont emboîtées les unes dans les autres et sont circonférentiellement en contact intime. Lors de la rotation de la bague 30, pour fixation de l'ensemble de commandes, les contre-rampes 31 déforment les secteurs 10, qui se déplacent radialement vers l'intérieur.

Bien entendu dans cette figure 3 la bague 30 présente des lumières annulaires d'orientation circonférentielle 36 pour réception des ergots 16 engagés chacun à jeu de montage dans une lumière 36.

Les bords latéraux des lumières 36 sont parallèles entre eux. La longueur circonférentielle est telle qu'elles permettent une rotation de la bague 30 et un serrage des secteurs 10 sans interférence avec les ergots 16.

Ces ergots 16 peuvent être introduits à force dans les lumières 36 au niveau de l'extrémité avale de celles-ci.

Pour faciliter ce montage la bague peut être localement d'épaisseur réduite entre son extrémité arrière et l'extrémité ovale de la lumière.

Cette zone d'épaisseur réduite est représentée en pointillés à la figure 3. Ainsi lors du montage cette zone se déforme pour passage de l'ergot 16, ici de section rectangulaire, en variante de section circulaire. Cette zone forme un passage axial.

En variante on peut ouvrir cette zone pour former une ouverture axiale.

En variante le support 2 des figures 1 et 2 peut porter des pattes axiales surplombant la bague. Ces pattes axiales peuvent être venues de moulage avec la paroi transversale du support délimitant la douille 1. Ces pattes portent à leur extrémité axiale un ergot dirigé radialement vers l'intérieur pour pénétrer dans la lumière 36.

Le montage de la bague se fait alors par encliquetage.

Il en résulte que la bague 30 avec ses lumières 36 est montée mobile en rotation par rapport à la douille 1 en étant guidée et calée axialement par les ergots 16 solidaires de la douille 1 ou du support 2.

Grâce aux lumières la bague est implantée le plus près possible de l'extrémité libre de la douille 1, au niveau de la zone la plus déformable de celle-ci.

La longueur axiale des contre-rampes 31 peut être égale ou inférieure à la longueur des rampes 11.

Dans le mode de réalisation de la figure 5 chaque secteur de serrage 10 présente une extrémité libre d'épaisseur réduite et une portion de forme tronconique, formant la rampe 111, raccordant cette extrémité libre à la partie principale du secteur 10 de plus grande épaisseur. Cette partie principale comporte la couronne 19. La rampe 111 est donc d'orientation axiale.

Les secteurs de manoeuvre 20 de la bague présentent une portion tronconique 60 de profil complémentaire à celui de la rampe. Un jeu existe entre la portion 60 et la rampe.

L'extrémité libre du secteur 20 est d'épaisseur réduite et se raccorde à la partie principale de plus grande épaisseur du secteur par la section 60. La réduction d'épaisseur du secteur 20 est réalisée à l'aide d'une creusure 61 d'orientation circonférentielle, réalisée dans l'épaisseur de la bague 30 et s'étendant axialement ici jusqu'à la moitié de la section 60 et c'est la raison pour laquelle un arrachement a été réalisé pour montrer la creusure 61, la bague 30 étant continue.

L'extrémité libre est dotée d'un rebord 131 saillant radialement vers l'intérieur. Ce rebord 131 a axialement en section une forme trapézoïdale. Ce rebord 131 forme la contre-rampe. La lumière 136 a une forme de portion d'hélice. Elle s'étend donc circonférentiellement et axialement.

Comme à la figure 3, deux lumières 136, diamétralement opposées sont prévues et un ergot 16 de la douille est monté comme à la figure 3 dans la lumière 136 de largeur constante. A l'aide de la poignée, on fait tourner la bague 30, ce qui entraîne, grâce à la lumière 136, formant came, un mouvement de translation de la bague 30 par rapport à la douille en sorte que les rebords 131 (les contre-rampes) viennent en prise par leur extrémité arrière inclinée avec les rampes 111. Les contre-rampes 131 montent alors sur les rampes 111, ce qui entraîne une déformation radialement vers l'intérieur du secteur 10 et donc un serrage de la douille sur le tube de la colonne de direction.

L'angle des rampes 111 et contre-rampes 131 est choisi pour conduire à un serrage irréversible.

Bien entendu le nombre de rampes 11,111 et contre-rampes 31,131 dépend des applications et notamment du diamètre externe de la douille 1 saillante axialement par rapport à la partie principale du support.

Le nombre de secteurs 10,20 et de languettes 13 dépend également des applications, le nombre de languettes 13 pouvant être inférieur au nombre de dégagements 33.

Les fenêtres 44 peuvent être remplacées par des creusures en sorte que le tube 40 n'est pas forcément ouvert.

On peut bien entendu inverser les structures, le tube 40 présentant des crans pénétrant dans des creusures ou ouvertures réalisées dans la douille 1.

A la figure 3, la forme et la pente des rampes 11 et contre-rampes 31 respectivement de forme convexe et concave dépend également des applications et notamment de la progressivité du serrage recherché. Il en est de même de la forme et de la pente des rampes et contre-rampes à la figure 5.

On notera que les moyens d'encliquetage 14,44 intervenant entre la douille 1 et le tube 10 bloquent en rotation également, après rattrapage du jeu de montage, la douille 1 par rapport au tube 40 en sorte que lesdits moyens prépositionnent l'ensemble de commande.

Suivant la longueur de la douille 1, on peut fermer celle-ci par une mince bande de matière en sorte que les secteurs de serrage 10 peuvent consister en des poutres s'étendant de la couronne 19 à cette autre couronne. Les fentes 9 peuvent donc être fermées à chacune de leurs extrémités axiales.

Dans tous les cas les secteurs de serrage 10 sont souples et les secteurs de manoeuvre 20 rigides.

On appréciera que la forme de réalisation de la figure 3 à deux rampes 11 par secteur 10 de serrage et deux contre-rampes 31 par secteur de manoeuvre 20 conduit à déformer de manière équilibrée les secteurs de serrage 10 qui sont ainsi ménagés.

Dans tous les cas la bague présente une came 31,136.

Dans le mode de réalisation de la figure 5, il fait appel à un cône de serrage fractionnée (rampes 111) en combinaison avec la came 136.

On obtient ainsi un très bon serrage de manière aisée, l'alésage interne de ta bague 30 est facile à réaliser par moulage, le rebord 131 étant de forme annulaire. La douille 1 est également plus facile à réaliser. En outre le serrage est plus énergique et mieux équilibré.

## Revendications

1. Ensemble de commandes placées sous le volant d'un véhicule automobile comportant une douille (1) déformable radialement pour être enfilée et fixée à serrage sur le tube (40) de la colonne de direction, **caractérisé en ce que** la douille (1) présente à sa périphérie externe des rampes (11,111), **en ce que** la douille (1) est entourée par une bague de fixation (30) présentant un pourtour continu et présentant à sa périphérie interne des contre-rampes (31,131) conformées pour coopérer avec les rampes (11,111) en sorte qu'une rotation de la bague (30) entraîne une diminution du diamètre interne de la douille (1), le diamètre de la bague de fixation restant constant lors de cette rotation.

2. Ensemble de commandes selon la revendication 1, **caractérisé en ce que** la bague de fixation (30) est plus rigide que la douille (1) permettant ainsi le serrage et le blocage de la douille (1) sur le tube (40) de la colonne de direction.

3. Ensemble de commandes selon la revendication 1 ou 2, **caractérisé en ce que** la bague de fixation (30) est en matière moulable et **en ce que** les contre-rampes (31,131) sont venues de moulage avec la bague (30).

4. Ensemble de commandes selon la revendication 1 à 3, **caractérisé en ce que** la bague (30) présente à sa périphérie externe une excroissance de préhension (38), telle qu'une poignée.

5. Ensemble de commandes selon l'une quelconque des revendications 1 à 4, **caractérisé en ce que** les rampes (11,111) sont venues de moulage avec la douille (1) en matière moulable.

6. Ensemble de commandes selon l'une quelconque des revendications 1 à 5, **caractérisé en ce que** la douille (1) et la bague de fixation (30) sont fractionnées respectivement en secteurs annulaires souples de serrage (10) et en secteurs annulaires rigides de manoeuvre (20), et **en ce que** les rampes (11,111) et contre-rampes (31,131) sont réalisées de manière complémentaire respectivement à la périphérie externe des secteurs de serrage (10) et à la périphérie interne des secteurs de manoeuvre (20).

7. Ensemble de commandes selon la revendication 6, **caractérisé en ce que** les secteurs de manoeuvre (20) sont séparés les uns des autres par des dégagements axiaux (33) et **en ce que** la douille (1) présente au moins une languette (13) crantée d'orientation axiale en vis-à-vis d'un des dégagements (33) pour montage par encliquetage de l'ensemble de commandes sur le tube de la colonne de direction.

8. Ensemble de commandes selon l'une des revendications 6 ou 7, **caractérisé en ce que** les secteurs de serrage (10) s'étendent en saillie axiale par rapport à une couronne (19) continue que présente la douille (1) à son extrémité axiale arrière opposée à son extrémité libre et **en ce que** des fentes (9) séparent entre eux les secteurs de serrage (10).

9. Ensemble de commandes selon l'une des revendications 7 ou 8, **caractérisé en** que la languette (13) est réalisée à la faveur de fentes (9) séparant entre eux les secteurs de serrage (10).

10. Ensemble de commandes selon l'une quelconque des revendications 1 à 9, **caractérisé en ce que** les rampes (11) et contre-rampes (111) sont d'orientation circonférentielle en étant emboîtées les unes dans les autres.

11. Ensemble de commandes selon la revendication 10, **caractérisé en ce que** deux rampes (11) et deux contre-rampes (31) sont prévues respectivement par secteur de serrage (10) et par secteur de manoeuvre (20).

12. Ensemble de commandes selon la revendication 10 ou 11, **caractérisé en ce que** la bague de fixation comporte au moins une lumière (36) d'orientation circonférentielle pour réception d'un ergot (16) porté par l'un des éléments de la douille (1) - support que comporte l'ensemble de commandes.

13. Ensemble de commandes selon l'une quelconque des revendications 1 à 9, **caractérisé en ce que** les rampes (111) et contre-rampes (131) sont d'orientation axiale et **en ce que** la bague de fixation (30) présente des moyens de guidage (136) en rotation de la bague (30) par rapport à la douille (1).

14. Ensemble de commandes selon la revendication 13, **caractérisé en ce que** les secteurs de manoeuvre (20) présentent chacun à la faveur d'une creusure (61) une extrémité libre d'épaisseur réduite raccordée à la partie principale dudit secteur (20) par une portion tronconique (60).

15. Ensemble de commandes selon la revendication 13 ou 14, **caractérisé en ce que**, pour formation des contre-rampes (131) l'extrémité libre d'un secteur de manoeuvre (20) présente un rebord dirigé radialement vers l'intérieur ayant axialement en section une forme trapézoïdale.

16. Ensemble de commandes selon la revendication 14 ou 15, **caractérisé en ce que** chaque secteur de serrage (10) présente une extrémité libre d'épaisseur réduite raccordée par une portion tronconique (111), formant rampe, à la partie principale de plus grande épaisseur du secteur de serrage (10).

17. Ensemble de commandes selon la revendication 13, **caractérisé en ce que** les moyens de guidage sont réalisés sous la forme d'au moins une lumière (136) portée par la bague de fixation (30) pour réception d'un ergot (16) porté par l'un des éléments de la douille (1).

18. Ensemble de commandes selon la revendication 16, **caractérisé en ce que** la lumière (136) est en forme d'hélice.

19. Ensemble de commandes selon l'une quelconques des revendications 1 à 18 **caractérisé en ce que** l'angle et/ou la pente des rampes (11, 111) et contre rampes (31, 131) est choisi pour conduire à un serrage irréversible.

## Patentansprüche

1. Steuereinheit, die unter dem Lenkrad eines Kraftfahrzeugs angebracht wird, umfassend eine Hülse (1), die radial verformbar ist, um auf dem Lenksäulenrohr (40) aufgesteckt und mittels Festspannung befestigt zu werden, **dadurch gekennzeichnet, daß** die Hülse (1) von einem Befestigungsring (30) umgeben ist, der eine durchgehende Umrandung und an seinem inneren Umfang Gegenrampen (31, 131) aufweist, die so gestaltet sind, daß sie mit den Rampen (11, 111) zusammenwirken können, so daß eine Drehung (30) des Rings (30) eine Verringerung des Innendurchmessers der Hülse (1) zur Folge hat, wobei der Durchmesser des Befestigungsrings bei dieser Drehung konstant bleibt.

2. Steuereinheit nach Anspruch 1, **dadurch gekennzeichnet, daß** der Befestigungsring (30) starrer als die Hülse (1) ist, so daß die Festspannung und die Sicherung der Hülse (1) auf dem Lenksäulenrohr (40) ermöglicht werden.

3. Steuereinheit nach Anspruch 1 oder 2, **dadurch gekennzeichnet, daß** der Befestigungsring (30) aus einem formbaren Werkstoff besteht und daß die Gegenrampen (31, 131) einstückig am Ring (30) angeformt sind.

4. Steuereinheit nach Anspruch 1 bis 3, **dadurch gekennzeichnet, daß** der Ring (30) an seinem äußeren Umfang eine Greifausstülpung (38), etwa einen Griff, aufweist.

5. Steuereinheit nach einem der Ansprüche 1 bis 4, **dadurch gekennzeichnet, daß** die Rampen (11, 111) einstückig an der Hülse (1) aus einem formbaren Werkstoff angeformt sind.

6. Steuereinheit nach einem der Ansprüche 1 bis 5, **dadurch gekennzeichnet, daß** die Hülse (1) und der Befestigungsring (30) in biegsame ringförmige Spannsegmente (10) bzw. in starre ringförmige Betätigungssegmente (20) unterteilt sind und daß die Rampen (11, 111) und Gegenrampen (31, 131) formschlüssig am äußeren Umfang der Spannsegmente (10) bzw. am inneren Umfang der Betätigungssegmente (20) ausgeführt sind.

7. Steuereinheit nach Anspruch 6, **dadurch gekennzeichnet, daß** die Betätigungssegmente (20) durch axiale Ansätze (33) voneinander getrennt sind und daß die Hülse (1) wenigstens eine axial ausgerichtete gerastete Zunge (13) gegenüber einem der Ansätze (33) für die durch Verrastung erfolgende Anbringung der Steuereinheit am Lenksäulenrohr aufweist.

8. Steuereinheit nach einem der Ansprüche 6 oder 7, **dadurch gekennzeichnet, daß** sich die Spannsegmente (10) axial vorstehend im Verhältnis einem durchgehenden Kranz (19) erstrecken, den die Hülse (1) an ihrem hinteren axialen Ende, das ihrem freien Ende gegenüberliegt, aufweist, und daß Schlitze (9) die Spannsegmente (10) voneinander trennen.

9. Steuereinheit nach einem der Ansprüche 7 oder 8, **dadurch gekennzeichnet, daß** die Zunge (13) anhand von Schlitzen (9) ausgeführt ist, welche die Spannsegmente (10) voneinander trennen.

10. Steuereinheit nach einem der Ansprüche 1 bis 9, **dadurch gekennzeichnet, daß** die Rampen (11) und Gegenrampen (111) umfangsmäßig ausgerichtet und ineinander eingepaßt sind.

11. Steuereinheit nach Anspruch 10, **dadurch gekennzeichnet, daß** zwei Rampen (11) und zwei Gegenrampen (31) pro Spannsegment (10) bzw. pro Betätigungssegment (20) vorgesehen sind.

12. Steuereinheit nach Anspruch 10 oder 11, **dadurch gekennzeichnet, daß** der Befestigungsring wenigstens ein umfangsmäßig ausgerichtetes Langloch (36) für das Einsetzen einer Nase (16) umfaßt, die an einem der Elemente Hülse (1) oder Träger angebracht ist, welche die Steuereinheit umfaßt.

13. Steuereinheit nach einem der Ansprüche 1 bis 9, **dadurch gekennzeichnet, daß** die Rampen (111) und Gegenrampen (131) axial ausgerichtet sind und daß der Befestigungsring (30) Führungsmittel (136) für die Drehung des Rings (30) im Verhältnis zur Hülse (1) aufweist.

14. Steuereinheit nach Anspruch 13, **dadurch gekennzeichnet, daß** die Betätigungssegmente (20) jeweils mittels einer Einsenkung (61) ein freies Ende mit geringerer Dicke aufweisen, das sich über einen kegelstumpfförmigen Abschnitt (60) an den Hauptteil des besagten Segments (20) anschließt.

15. Steuereinheit nach Anspruch 13 oder 14, **dadurch gekennzeichnet, daß** zur Bildung der Gegenrampen (131) das freie Ende eines Betätigungssegments (20) eine radial nach innen gerichtete Randleiste aufweist, die axial im Schnitt eine trapezartige Form aufweist.

16. Steuereinheit nach Anspruch 14 oder 15, **dadurch gekennzeichnet, daß** jedes Spannsegment (10) ein freies Ende mit geringerer Dicke aufweist, das sich über einen eine Rampe bildenden kegelstumpfförmigen Abschnitt (111) an den mit größerer Dicke ausgeführten Hauptteil des Spannsegments (10) anschließt.

17. Steuereinheit nach Anspruch 13, **dadurch gekennzeichnet, daß** die Führungsmittel in Form wenigstens eines Langlochs (136) ausgeführt sind, das am Befestigungsring (30) zum Einsetzen einer an einem der Elemente der Hülse (1) angebrachten Nase (18) eingearbeitet ist.

18. Steuereinheit nach Anspruch 16, **dadurch gekennzeichnet, daß** das Langloch (136) spiralförmig ausgebildet ist.

19. Steuereinheit nach einem der Ansprüche 1 bis 18, **dadurch gekennzeichnet, daß** der Winkel und/oder die Steigung der Rampen (11, 111) und Gegenrampen (31, 131) so gewählt ist, daß sich eine nicht umkehrbare Festspannung ergibt.

## Claims

1. Set of controls placed under the steering wheel of a motor vehicle comprising a bushing (1) that is radially deformable so that it can be slipped onto and fixed by clamping to the tube (40) of the steering column, **characterized in that** the bushing (1) at its external periphery has ramps (11, 111), **in that** the bushing (1) is surrounded by a fixing ring (30) having a continuous outline and exhibiting, on its internal periphery, counter-ramps (31, 131) which are shaped to collaborate with the ramps (11, 111) so that turning the ring (30) causes a reduction in the inside diameter of the bushing (1), the diameter of the fixing ring remaining constant during this turning.

2. Set of controls according to Claim 1, **characterized in that** the fixing ring (30) is more rigid than the bushing (1), thus allowing the bushing (1) to be clamped and immobilized on the tube (40) of the steering column.

3. Set of controls according to Claim 1 or 2, **characterized in that** the fixing ring (30) is made of a mouldable material and **in that** the counter-ramps (31, 131) are moulded integrally with the ring (30).

4. Set of controls according to Claims 1 to 3, **characterized in that** the ring (30) has, at its external periphery, a protrusion (38) for grasping, such as a handle.

5. Set of controls according to any one of Claims 1 to 4, **characterized in that** the ramps (11, 111) are moulded integrally with the bushing (1) from mouldable material.

6. Set of controls according to any one of Claims 1 to 5, **characterized in that** the bushing (1) and the fixing ring (30) are respectively split up into flexible annular clamping sectors (10) and rigid annular operating sectors (20), and **in that** the ramps (11, 111) and counter-ramps (31, 131) are made so that they respectively complement the external periphery of the clamping sectors (10) and the internal periphery of the operating sectors (20).

7. Set of controls according to Claim 6, **characterized in that** the operating sectors (20). are separated from one another by axial clearances (33) and **in that** the bushing (1) has at least one axial orientation tab (13) with a catch, facing one of the clearances (33) so that the set of controls can be snap-fastened onto the tube of the steering column.

8. Set of controls according to either of Claims 6 and 7, **characterized in that** the clamping sectors (10) extend over an axial projection with respect to a continuous hoop (19) that the bushing (1) exhibits at its rear axial end opposite its free end, and **in that** slits (9) separate the clamping sectors (10) from one another.

9. Set of controls according to either of Claims 7 and 8, **characterized in that** the tab (13) is made by virtue of slits (9) separating the clamping sectors (10) from each other.

10. Set of controls according to any one of Claims 1 to 9, **characterized in that** the ramps (11) and counter-ramps (111) are oriented circumferentially and nested inside each other.

11. Set of controls according to Claim 10, **characterized in that** two ramps (11) and two counter-ramps (31) are provided respectively per clamping sector (10) and per operating sector (20).

12. Set of controls according to Claim 10 or 11, **characterized in that** the fixing ring comprises at least one circumferentially oriented slot (36) to house a stud (16) borne by one of the elements of the bushing (1) - support that the set of controls comprises.

13. Set of controls according to any one of Claims 1 to 9, **characterized in that** the ramps (111) and counter-ramps (131) are oriented axially and **in that** the fixing ring (30) has means (136) for guiding the turning of the ring (30) with respect to the bushing (1).

14. Set of controls according to Claim 13, **characterized in that** the operating sectors (20) each have, by virtue of a recess (61) a free end of lesser thickness connected to the main part of the said sector (20) by a frustoconical portion (60).

15. Set of controls according to Claim 13 or 14, **characterized in that**, in order to form the counter-ramps (131), the free end of an operating sector (20) has a rim facing radially inwards and axially having a cross section of trapezoidal shape.

16. Set of controls according to Claim 14 or 15, **characterized in that** each clamping sector (10) has a free end of lesser thickness connected by a frustoconical portion (111), forming a ramp, to the larger-thickness main part of the clamping sector (10).

17. Set of controls according to Claim 13, **characterized in that** the guide means are produced in the form of at least one slot (136) carried by the fixing ring (30) to house a stud (16) carried by one of the elements of the bushing (1).

18. Set of controls according to Claim 16, **characterized in that** the slot (136) is in the form of a helix.

19. Set of controls according to any one of Claims 1 to 18, **characterized in that** the angle and/or the slope of the ramps (11, 111) and counter-ramps (31, 131) is chosen to lead to irreversible clamping.
